# EUROPEAN PATENT APPLICATION

(11) **EP 2 472 377 A2**
(43) Date of publication of application: **04.07.2012**
(21) Application number: 11178311.4
(22) Date of filing: 22.08.2011
(51) Int. Cl.: G06F 3/048

(54) **Method for unlocking screen and executing application program**

(30) Priority: 31.12.2010 TW 99147235
(71) Applicant: Acer Incorporated, New Taipei City 221 (TW)
(72) Inventor: Chang, Yi-Wei, 221,Taiwan, ROC New Taipei City (TW)
(74) Representative: Chamberlain, Alan James

(57) **Abstract**

A method for unlocking screen and executing application program is provided. The method is adapted to a mobile device having a touch screen. Under a screen lock mode of the mobile device, the touch screen is used to detect a touch and drag operation of a user. Then, it is determined whether a start point of the touch and drag operation is located within a predetermined region and a dragging distance of the touch and drag operation along a predetermined path is over a predetermined distance. If yes, it is further determined whether an end point of the touch and drag operation is located within one of a plurality of segmented regions of the touch screen, which respectively correspond to a plurality of application programs. If yes, the screen is unlocked and the application program corresponding to segmented region where the end point is located is executed simultaneously.

## Description

### CROSS-REFERENCE TO RELATED APPLICATION

This application claims the priority benefit of Taiwan application serial no. 99147235, filed on December 31, 2010. The entirety of the above-mentioned patent application is hereby incorporated by reference herein and made a part of this specification.

### BACKGROUND

### Field of the Invention

The invention relates to a method for operating a user interface. Particularly, the invention relates to a method for unlocking screen and executing application program.

### Description of Related Art

In the current era of information explosion, electronic communication is indispensable in people's daily life, and people often use portable electronic devices to communicate with each other, especially mobile communication devices that can be carried around, for example, mobile phones or mobile devices having a wireless communication function, etc. However, regarding the portable mobile device requiring features of lightness, slimness, shortness and smallness, a size thereof is strictly limited, so that a touch screen technique is developed to integrate a soft keyboard with a screen to serve as an input interface of the portable electronic device, so as to save cost of a conventional keyboard and an area occupied by the conventional keyboard.

However, the touch screen is quite sensitive to an external touch operation, and a user may inadvertently touch a screen key displayed on the touch screen to execute a specific function, for example, a call function by accident. Therefore, the mobile device has a screen lock mode to prevent the user from miss-touching the touch screen.

Under the screen lock mode, the user has to complete a specific unlocking operation in order to normally use the input interface. Then, the user may operate the touch screen to activate and execute required application programs. Therefore, if the screen can be unlocked within an extremely short time while simultaneously executing an application program commonly used by the user (for example, editing a message or accessing the Internet, etc.), utilization convenience of the portable mobile device is improved.

### SUMMARY OF THE INVENTION

Accordingly, the invention is directed to a method for unlocking screen and executing application program, by which a user can unlock the screen within an extremely short time while simultaneously executing a commonly used application program.

The invention provides a method for unlocking screen and executing application program. The method is adapted to a mobile device having a touch screen. Under a screen lock mode of the mobile device, the touch screen is used to detect a touch and drag operation of a user. Then, it is determined whether a start point of the touch and drag operation is located within a first predetermined region of the touch screen and a dragging distance of the touch and drag operation along a predetermined path is over a predetermined distance. If yes, it is further determined whether an end point of the touch and drag operation is located within one of a plurality of segmented regions of the touch screen, where the segmented regions respectively correspond to a plurality of application programs. When the end point of the touch and drag operation is located within one of the segmented regions, the screen lock state is exited and the application program corresponding to the segmented region where the end point of the touch and drag operation is located is executed simultaneously.

In an embodiment of the invention, after the step of determining whether the start point of the touch and drag operation is located within the first predetermined region of the touch screen and the dragging distance of the touch and drag operation along the predetermined path is over the predetermined distance, the method further includes determining whether the touch and drag operation drags to a second predetermined region of the touch screen. If yes, it is further determined the segmented region where the end point of the touch and drag operation is located, so as to execute the corresponding application program.

In an embodiment of the invention, the method for unlocking screen and executing application program further includes displaying an unlocking icon in the first predetermined region of the touch screen to notify the user executing the touch and drag operation for unlocking.

In an embodiment of the invention, the method for unlocking screen and executing application program further includes displaying an application program icon in each of the segmented regions of the touch screen to notify the user the application program corresponding to each of the segmented regions.

In an embodiment of the invention, the application program icons are displayed when it is determined that the start point of the touch and drag operation is located within the first predetermined region of the touch screen and the dragging distance is over the predetermined distance.

In an embodiment of the invention, the segmented regions are a plurality of square regions obtained by equally segmenting the touch screen, or a plurality of ring-shape regions extending outwards while taking the start point of the touch and drag operation as a circle center.

In an embodiment of the invention, the predetermined path is a straight line path, a spiral path, a clockwise path, a counter clockwise path or a Z-shape path.

In an embodiment of the invention, the first predetermined region is one of four corner regions of the touch screen.

In an embodiment of the invention, the segmented regions are a plurality of ring-shape regions extending outwards while taking the corner of the touch screen as a circle center.

In an embodiment of the invention, the application programs corresponding to the segmented regions are predetermined by the user or commonly used application programs.

According to the above descriptions, when the user uses a mobile device having a touch screen, the user can unlock the screen while executing an application program through a simple touch and drag operation. In this way, a step and time for clicking and selecting the application program to be activated after the screen is unlocked can be saved, which improves convenience for the user using the mobile device having the touch screen.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a flowchart illustrating a method for unlocking screen and executing application program according to an embodiment of the invention.

FIG. 2(a) to FIG. 2(c) are examples of segmented regions corresponding to application programs according to an embodiment of the invention.

FIG. 3 is a flowchart illustrating a method for unlocking screen and executing application program according to another embodiment of the invention.

FIG. 4(a) to FIG. 4(e) are diagrams illustrating examples of a method for unlocking screen and executing application program according to an embodiment of the invention.

### DETAILED DESCRIPTION OF DISCLOSED EMBODIMENTS

In the invention, a mobile device having a touch screen is used to detect a touch and drag operation of a user on the touch screen under a screen lock mode, and a predetermined region and a plurality of segmented regions are defined on the touch screen. Then, it is determined whether the screen lock mode is exited according to the touch and drag operation of the user in these regions, and an application program is simultaneously executed. In order to fully convey the spirit of the invention to those skilled in the art, embodiments are provided below for descriptions.

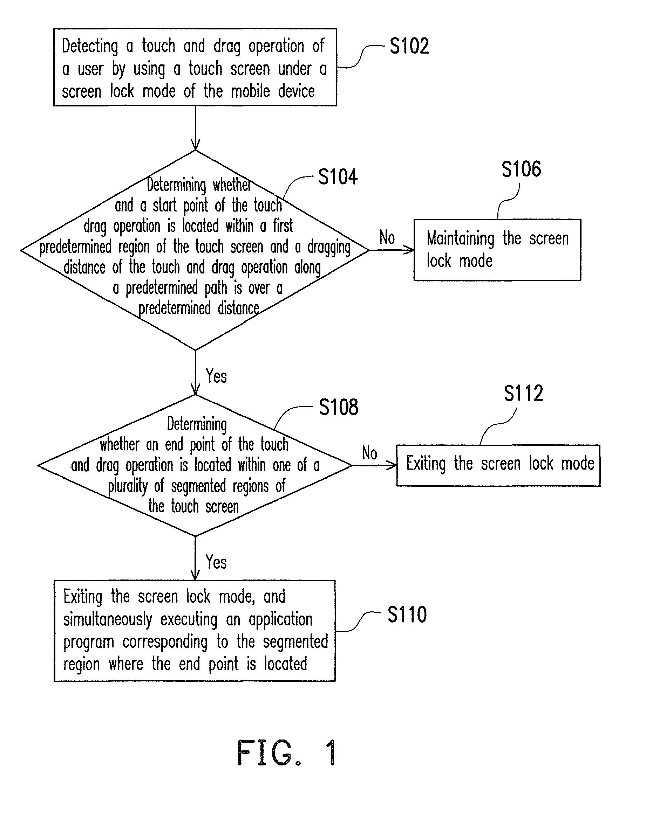

FIG. 1 is a flowchart illustrating a method for unlocking screen and executing application program according to an embodiment of the invention. The method of the embodiment is adapted to a mobile device having a touch screen, for example, a mobile phone, a personal digital assistant (PDA), a PDA phone, or a notebook computer, etc. Referring to FIG. 1, steps of the method are as follows.

In case that the mobile device of the embodiment has entered the screen lock mode, it is determined whether the screen is unlocked or the screen is unlocked while an application program is executed according to a touch and drag operation of the user. The mobile device may, for example, automatically enter the screen lock mode when an operation of the user is not detected for a period of time, or directly enter the screen lock mode when an indicating signal of a screen lock function is received, which is not limited by the invention.

Moreover, although the mobile device has entered the screen lock mode, the touch screen of the mobile device still continually operates and does not stop operating due to that the screen lock mode is entered. Therefore, under the screen lock mode of the mobile device, the touch screen can still be used to detect the touch and drag operation of the user on the touch screen (step S102).

When the touch screen detects the touch and drag operation, it is determined whether a start point of the touch and drag operation is located within a first predetermined region of the touch screen and a dragging distance of the touch and drag operation along a predetermined path is over a predetermined distance. (S104). The first predetermined region may include a touch region of the whole touch screen or may only include a part of the touch region of the touch screen. In order to distinguish whether the touch and drag operation detected by the touch screen is an operation intentionally performed by the user or inadvertently performed by the user, the dragging distance has to be over the predetermined distance along the predetermined path, where the predetermined path is a straight line path, a spiral path, a clockwise path, a counter clockwise path or a Z-shape path, etc. Since a length of the predetermined distance is limited by a size of the touch screen, it is determined according to an actual design requirement, which is not limited by the invention.

If the start point of the touch and drag operation is not located within the first predetermined region of the touch screen, or the start point of the touch and drag operation is located within the first predetermined region of the touch screen though the dragging distance is not over the predetermined distance along the predetermined path, the mobile device maintains the screen lock mode (S106). If the start point of the touch and drag operation is located within the first predetermined region of the touch screen and the dragging distance is over the predetermined distance along the predetermined path, it is further determined whether an end point of the touch and drag operation is located within one of a plurality of segmented regions of the touch screen (S108).

When the end point of the touch and drag operation is located within one of the segmented regions of the touch screen, the screen lock state is exited and the application program corresponding to the segmented region where the end point of the touch and drag operation is located is executed simultaneously (step S110). When the end point of the touch and drag operation is not located within one of the segmented regions of the touch screen, the mobile device only releases the screen lock mode (S112).

The segmented regions may include the touch region of the whole touch screen or may only include a part of the touch region of the touch screen. In an embodiment of the invention, the segmented regions are a plurality of square regions obtained by equally segmenting the touch screen. In another embodiment, the segmented regions are a plurality of ring-shape regions extending outwards while taking the start point of the touch and drag operation as a circle center. The segmenting method of the segmented regions is not limited by the invention. Moreover, each segmented region corresponds to a different application program, and the application programs are predetermined by the user or commonly used application programs.

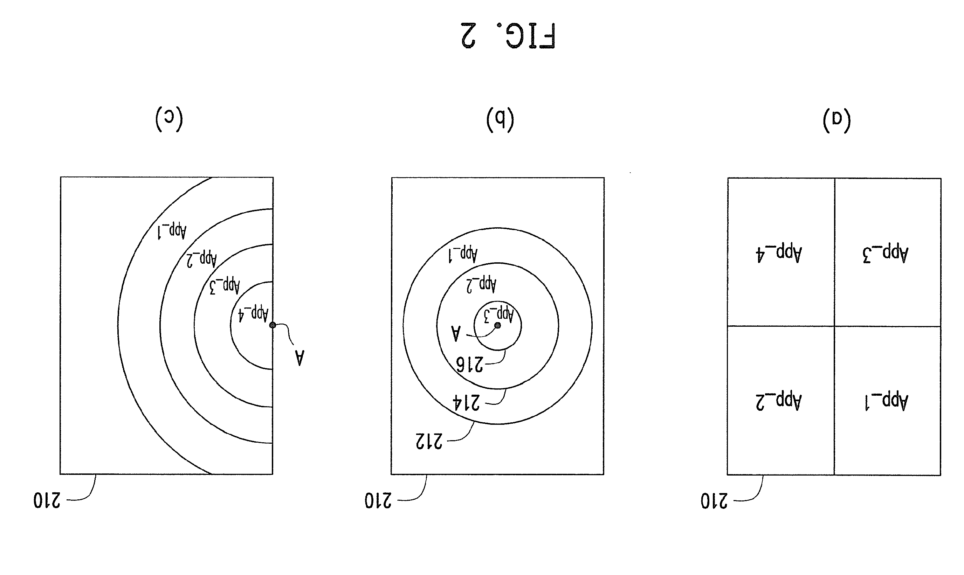

For example, FIG. 2(a) to FIG. 2(c) are examples of segmented regions corresponding to application programs according to an embodiment of the invention. Referring to FIG. 2, in FIG. 2(a), a touch screen 210 of the mobile device has four square segmented regions respectively corresponding to four different application programs App_1-App_4. In FIG. 2(b) and FIG. 2(c), a plurality of ring-shape regions extending outwards while taking the start point of the touch and drag operation as a circle center is taken as an example, as shown in FIG. 2(b), a point A is the start point of the touch and drag operation, a ring-shape region 212 corresponds to the first application program App_1, a ring-shape region 214 corresponds to the second application program App_2, and a ring-shape region 216 corresponds to the third application program App_3. Deduced by analogy, four circular segmented regions of FIG. 2(c) respectively correspond to the four different application programs App_1-App_4. A difference between the example of FIG. 2(b) and the example of FIG. 2(c) lies in different positions of the start point A of the touch and drag operation, so that ranges and sizes of the ring-shape regions are different. Therefore, the numbers, ranges and sizes of the segmented regions are not limited by the invention, which can be determined according to an actual design requirement.

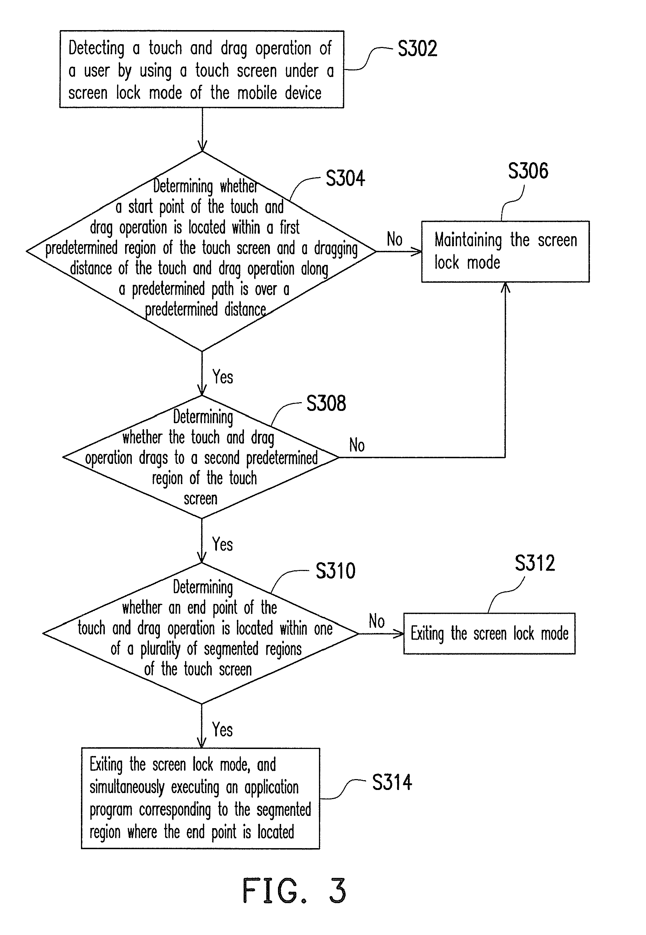

FIG. 3 is a flowchart illustrating a method for unlocking screen and executing application program according to another embodiment of the invention. Referring to FIG. 3, in step S302, under the screen lock mode of the mobile device, the touch screen is used to detect a touch and drag operation of the user. Then, in step S304, it is determined whether a start point of the touch and drag operation is located within a first predetermined region of the touch screen and a dragging distance of the touch and drag operation along a predetermined path is over a predetermined distance. If the above conditions are not satisfied, a step S306 is executed, by which the mobile device maintains the screen lock mode. If the above conditions of the step S304 are satisfied, a step S308 is executed, by which it is further determined whether the touch and drag operation drags to a second predetermined region of the touch screen. If the touch and drag operation does not drag to the second predetermined region, the screen lock state is still maintained, and if the touch and drag operation indeed drags to the second predetermined region, in step S310, it is further determined whether an end point of the touch and drag operation is located within one of a plurality of segmented regions. When the end point of the touch and drag operation is not located within one of the segmented regions, a step S312 is executed, by which only the screen lock state is exited. When the end point of the touch and drag operation is located within one of the segmented regions, in step S314, the screen lock state is exited and the application program corresponding to the segmented region where the end point is located is executed simultaneously.

In brief, only when the user first touches the first predetermined region, and then drags from the first predetermined region to the second predetermined region, and finally ends the touch and drag operation within one of the segmented regions, the mobile device confirms a valid touch and drag operation to exit the screen lock state and simultaneously execute the application program corresponding to the segmented region where the end point of the touch and drag operation is located.

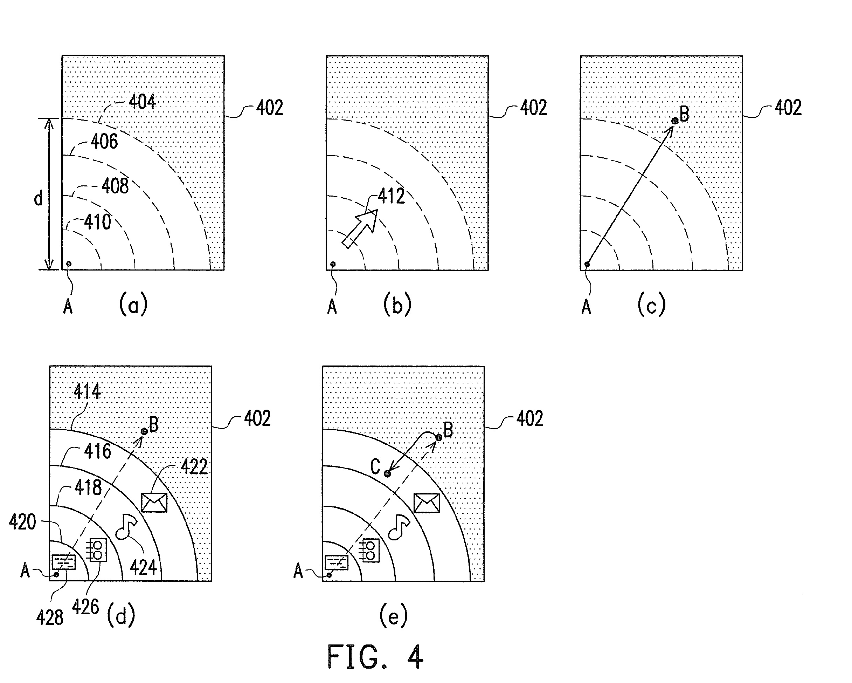

In order to further describe the method for unlocking screen and executing application program, another embodiment is provided below for description. FIG. 4(a) to FIG. 4(e) are diagrams illustrating examples of the method for unlocking screen and executing application program according to an embodiment of the invention.

Referring to FIG. 4, under the screen lock state of a touch screen 402, it is first determined whether the start point of the touch and drag operation of the user is located within the first predetermined region of the touch screen. In the present embodiment, the first predetermined region can be one of four corner regions of the touch screen. As shown in FIG. 4(a), the start point A of the touch and drag operation is located within one of the four corners, and now the predetermined distance, the segmented regions and the second predetermined region can be defined. The segmented regions are a plurality of ring-shape regions extending outwards while taking the corner where the start point A of the touch and drag operation is located as a circle center. As shown in FIG. 4(a), a first ring-shape region is located between a dot line 404 and a dot line 406, a second ring-shape region is located between the dot line 406 and a dot line 408, a third ring-shape region is located between the dot line 408 and a dot line 410, and a fourth ring-shape region is located inside the dot line 410. The remained gray part is the second predetermined region, and a length of the predetermined distance is set to d.

After the start point A of the touch and drag operation is detected, an unlocking icon can be displayed in the first predetermined region to notify the user executing the touch and drag operation for unlocking. For example, as shown in FIG. 4(b), an unlocking icon 412 is, for example, an arrow symbol, and a direction of the arrow notifies the user that the touch and drag operation has to drag towards top right of the touch screen 402 for unlocking. Then, when the user drags from the start point A to a point B shown in FIG. 4(c), since a dragging distance of the touch and drag operation exceeds the predetermined distance d, and the touch and drag operation reaches the second predetermined region of the touch screen 402, actual ranges of the segmented regions are displayed on the touch screen, and icons of the application programs are displayed in the segmented regions to notify the user the application program corresponding to each of the segmented regions.

As shown in FIG. 4(d), solid lines 414-420 segment four ring-shape regions. For example, an application program icon 422 represents a message function and is located in the first ring-shape region, an application program icon 424 represents a multimedia function and is located in the second ring-shape region, an application program icon 426 represents an address-book function and is located in the third ring-shape region, and an application program icon 428 represents a chat room function and is located in the fourth ring-shape region. The above application programs can be predetermined by the user or can be commonly used application programs that are automatically set by the mobile device, which is not limited by the invention.

Referring to FIG. 4(e), if the user continually drags from the point B to a point C on the touch screen 402, and ends the touch and drag operation at the point C, since the end point C of the touch and drag operation is determined to be located in one of the four ring-shape regions, for example, the first ring-shape region of FIG. 4(e), the mobile device exits the screen lock mode and executes the application program of the message function corresponding to the first ring-shape region.

It should be noticed that since the first ring-shape region is closest to the second predetermined region, and the second ring-shape region is secondarily closest to the second predetermined region, and deduced by analogy, the touch and drag operation for activating the application program icon 422 is faster than the touch and drag operation for activating the application program icon 428 due to that the first ring-shape region is closer to the second predetermined region. Therefore, when the user sets the application program corresponding to each of the ring-shape regions, the user may set the most commonly used application program in the first ring-shape region, and then set the secondary commonly used application program in the second ring-shape region, and deduced by analogy. In this way, the utilization convenience is improved.

In summary, the invention provides a method for unlocking screen and executing application program, by which when the user uses a mobile device having a touch screen, the user can unlock the screen while executing an application program through a simple touch and drag operation. In this way, steps and time for operating the touch screen can be saved, which improves convenience for the user using the mobile device having the touch screen.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for unlocking screen and executing application program, adapted to a mobile device having a touch screen (210, 402), the method comprising:
detecting (S102, S302) a touch and drag operation of a user by using the touch screen (210, 402) under a screen lock mode of the mobile device;
determining (S104) whether a start point (A) of the touch and drag operation is located within a first predetermined region of the touch screen (210, 402) and a dragging distance of the touch and drag operation along a predetermined path is over a predetermined distance;
if yes, determining (S108, S310) whether an end point (B) of the touch and drag operation is located within one of a plurality of segmented regions (212, 214, 216) of the touch screen (210, 402), wherein the segmented regions (212, 214, 216) respectively correspond to a plurality of application programs (App_1, App_2, App_3) of the mobile device; and
exiting (S 110, S314) the screen lock mode, and simultaneously executing the application program (App_1, App_2, App_3) corresponding to the segmented region (212, 214, 216) where the end point (B) is located when the end point (B) of the touch and drag operation is located within one of the segmented regions (212, 214, 216).

2. The method for unlocking screen and executing application program as claimed in claim 1, wherein after the step of determining whether the start point (A) of the touch and drag operation is located within the first predetermined region of the touch screen (210, 402) and the dragging distance of the touch and drag operation along the predetermined path is over the predetermined distance, the method further comprises:
determining (S308) whether the touch and drag operation drags to a second predetermined region of the touch screen (210, 402); and
if yes, determining the segmented region (212, 214, 216) where the end point (B) of the touch and drag operation is located (S310), so as to execute the corresponding application program.

3. The method for unlocking screen and executing application program as claimed in claim 1 or 2, further comprising:
displaying an unlocking icon (412) in the first predetermined region of the touch screen (210, 402) to notify the user executing the touch and drag operation for unlocking.

4. The method for unlocking screen and executing application program as claimed in any one of claims 1 to 3, further comprising:
displaying an application program icon (422, 424, 426, 428) in each of the segmented regions (212, 214, 216) of the touch screen (210, 402) to notify the user the application program corresponding to each of the segmented regions (212, 214, 216).

5. The method for unlocking screen and executing application program as claimed in claim 4, wherein the application program icons (422, 424, 426, 428) are displayed when it is determined that the start point (A) of the touch and drag operation is located within the first predetermined region of the touch screen (210, 402) and the dragging distance is over the predetermined distance.

6. The method for unlocking screen and executing application program as claimed in any one of claims 1 to 5, wherein the segmented regions (212, 214, 216) are a plurality of square regions obtained by equally segmenting the touch screen (210, 402), or a plurality of ring-shape regions extending outwards while taking the start point (A) of the touch and drag operation as a circle center.

7. The method for unlocking screen and executing application program as claimed in any one of claims 1 to 6, wherein the predetermined path is a straight line path, a spiral path, a clockwise path, a counter clockwise path or a Z-shape path.

8. The method for unlocking screen and executing application program as claimed in any one of claims 1 to 7, wherein the first predetermine region is one of four corner regions of the touch screen (210, 402).

9. The method for unlocking screen and executing application program as claimed in claim 8, wherein the segmented regions (212, 214, 216) are a plurality of ring-shape regions extending outwards while taking the corner of the touch screen (210, 402) as a circle center.

10. The method for unlocking screen and executing application program as claimed in any one of claims 1 to 9, wherein the application programs (App_1, App_2, App_3) corresponding to the segmented regions (212, 214, 216) are predetermined by the user or commonly used application programs (App_1, App_2, App_3).

11. The method for unlocking screen and executing application program as claimed in any one of claims 1 to 10, wherein the application programs (App_1, App_2, App_3) are arranged according to a using frequency thereof.
